# EUROPÄISCHE PATENTSCHRIFT

(11) **EP 1 657 572 B1**
(45) Veröffentlichungstag und Bekanntmachung des Hinweises auf die Patenterteilung: **28.04.2010**
(21) Anmeldenummer: 05013901.3
(22) Anmeldetag: 28.06.2005
(51) Int. Cl.: G01T 7/00

(54) **Autonome ABC-Sonde**
An autonomous nuclear, biological, chemical (NBC) probe
Un sonde nucleaire, biologique et chimique (NBC) d'autonome

(30) Priorität: 15.09.2004 DE 102004044633
(43) Veröffentlichungstag der Anmeldung: 17.05.2006
(73) Patentinhaber: Rheinmetall Waffe Munition GmbH, 29345 Unterlüss (DE)
(72) Erfinder: Knese, Gerd Christian, 29328 Fassberg (DE)
(74) Vertreter: Dietrich, Barbara

(56) Entgegenhaltungen:
- US-A- 5 324 948
- US-A1- 2002 175 294
- UNMANNED GROUND VEHICLE TECHNOLOGY VI 13-15 APRIL 2004 ORLANDO, FL, USA, Bd. 5422, Nr. 1, 15. April 2004 (2004-04-15), Seiten 228-237, XP002371458 Proceedings of the SPIE - The International Society for Optical Engineering SPIE-Int. Soc. Opt. Eng USA ISSN: 0277-786X

## Beschreibung

Die Erfindung betrifft eine in ein Zielgebiet verbringbare autonome Sonde.

Zum Aufspüren radioaktiver Strahlung sowie biologischer oder chemischer Kampfstoffe ist es bekannt, entweder mit Schutzanzügen versehene Personen oder entsprechend ausgerüstete gepanzerte Fahrzeuge in das Zielgebiet zu schicken, um dort die Strahlung bzw. die Kampfstoffe zu ermitteln.

Bei der zunehmenden Bedrohung durch den Einsatz von ABC-Waffen auf den Gefechtsfeldern ist das Bedrohungspotential für die Messungen durchführenden ABC-Spezialisten beträchtlich und der Einsatz entsprechender Fahrzeuge mit hohen Kosten verbunden. Außerdem können entsprechende Fahrzeuge häufig nicht überall auf dem Gefechtsfeld eingesetzt werden, so dass sie nur ein begrenztes Einsatzspektrum besitzen. Schließlich ist ein relativ hoher Logistikaufwand mit dem Einsatz derartiger Fahrzeuge verbunden.

Die US 5,324,948 A beschreibt ein autonomes, mobiles System zur Bestimmung auf das Vorhandensein einer atomaren Kontamination. Es besitzt Sensoren zur Messung energiereiche (radiologischer) Strahlungen, wie Röntgen- oder Gammastrahlungen. Dazu fährt das System einen vorprogrammierten Weg oder Bereich ab.

Die US 2002/0175294 A1 beschäftigt sich mit einem transportablen digitalen LIDAR System, mit dessen Hilfe chemische und biologische Mittel als solche in der Luft detektierbar sind. Im Gegensatz zu analogen LIDAR- Systemen ist ein digitales klein bauender ausführbar. Das System bzw. der Scanner des Systems kann dabei einen Bereich von ± 60° in Azimut und ist in der Höhe geringfügig verschwenkt werden.

Aus "PackBot: A Versatile Platform for military Robotic", Proceedings of SPIE Vol. 5422, Seiten 228 - 236, ist ein mobiles System mit chemischen radiologischen Sensoren bekannt, welches als EOD in das entsprechende Gebiet verbracht werden kann und mehrere Manipulatorarme aufweist. Die chemischen und radiologischen Sensoren dienen zur Ermittlung einer chemischen oder nuklearen Verseuchung. Zur autarken Navigation besitzt das EOD u. a. einen Laser, ein GPS sowie einen INS - Sensor.
Dieses Dokument offenbart demnach eine mittels Hubschrauber als auch manuell in ein Zielgebiet verbringbare, im Zielgebiet abgesetzte Sonde umfassend eine Sensoreinrichtung zur Messung der radioaktiven Strahlung im Zielgebiet sowie zur Bestimmung des Gehalts der Luft an chemischen Kampfstoffen sowie deren Klassifizierung. Die Sonde umfasst ferner ein Gehäuse mit einer elektronischen Auswerte- und Steuereinrichtung, mit Hilfe welcher die von den Sensoreinrichtungen ermittelten Messwerte ausgewertet werden können, sowie eine Nachrichtenübermittlungseinrichtung mit Hilfe derer die Messwerte oder die ausgewerteten Messwerte an eine Operationszentrale übermittelbar sind.

Die nach veröffentlichte EP 1 494 189 A2 behandelt eine autonome ABC-Sensoreinrichtung, die Sensoren aufweist, welche dazu dienen, nicht nur radioaktive Strahlungen oder chemische und / oder biologische Kampfstoffe als solche zu messen und zu bestimmen, d. h. zu klassifizieren, sondern auch die Einstrahlrichtung zu bestimmen Gemessen wird jedoch nur in der unmittelbaren Nähe der Sensoreinrichtung.

Der Erfindung liegt die Aufgabe zugrunde, eine kostengünstige Lösung zur Ermittlung radioaktiver Strahlung sowie deren Einstrahlrichtung und/oder zur Bestimmung biologischer und/oder chemischer Kampfstoffe sowie deren Klassifizierung anzugeben, welche einen unmittelbaren Einsatz von ABC-Spezialisten nicht erforderlich macht. Ziel der Erfindung ist daher eine autonome und frühzeitige Warnung vor ABC-Einwirkungen.

Diese Aufgabe wird erfindungsgemäß durch die Merkmale des Anspruchs 1 gelöst. Eine weitere, besonders vorteilhafte Ausgestaltung der Erfindung offenbaren die Unteransprüche.

Die Erfindung beruht im Wesentlichen auf dem Gedanken, entsprechende ABC-Sensoreinrichtungen in eine autonome Sonde zu integrieren, welche mittels Hubschrauber, Drohnen, Raketen und Cargogeschossen (z.B. mit einem Artilleriegeschoß oder Lenkmunition), aber auch manuell in das entsprechende Zielgebiet verbringbar ist. Die erfindungsgemäße Sonde umfasst ferner eine elektronische Auswerte- und Steuereinrichtung sowie eine Nachrichtenübermittlungseinrichtung. Bei den Sensoreinrichtungen zur Bestimmung des Gehaltes der Luft an biologischen und/oder chemischen Kampfstoffen handelt es sich um Femdetektoren, die mindestens eine elektromagnetische Strahlungsquelle und eine Empfangsvorrichtung zum Empfang gestreuter oder durch den Primärstrahl angeregter elektromagnetischer Strahlung umfassen. Durch Verwendung derartiger Ferndetektoren ist es möglich, biologische und/oder chemische Kampfstoffe bereits dann zu detektieren, wenn sie das Zielgebiet noch nicht erreicht haben.

Bei der elektromagnetischen Strahlungsquelle kann es sich vorzugsweise um eine einen Laser umfassende Laseranordnung und bei der Empfangsvorrichtung um eine optische Messeinrichtung handeln, welche das an den Kampfstoffen gestreute Licht auswertet.

Sofern es sich um eine abwerfbare Sonde handelt, umfasst diese vorzugsweise ferner eine Bremseinrichtung.

Die erfindungsgemäße Sonde weist, abgesehen davon, dass sie im Vergleich zu gepanzerten Fahrzeugen relativ kostengünstig ist und keinen unmittelbaren Einsatz von ABC-Spezialisten erfordert, den Vorteil auf, dass sie sehr schnell auch in Gebieten abgesetzt werden kann, welche von der Operationszentrale einen Abstand größer 40 km aufweisen. Außerdem ist nur eine einfache Logistik erforderlich, und die Sonde kann problemlos über mehrere Monate einen autonomen Betrieb gewährleisten, sofern die Stromversorgungseinrichtungen entsprechend ausgelegt sind.

Bei dem Laser kann es sich z.B. auch um einen UV-Laser handeln, dessen Wellenlänge derart gewählt ist, daß die bestrahlten biologischen und/oder chemischen Kampfstoffe zur Fluoreszenz angeregt werden, die dann mit der Empfangsvorrichtung gemessen und mit der elektronischen Auswerte- und Steuervorrichtung ausgewertet wird.

Als besonders vorteilhaft hat es sich erwiesen, wenn die Sensoreinrichtung eine Vorrichtung zur Erzeugung eines rotierenden, schräg nach oben gerichteten Laserstrahles umfaßt.

Weitere Einzelheiten und Vorteile der Erfindung ergeben sich aus dem folgenden anhand von Figuren erläuterten Ausführungsbeispiel.

### Es zeigen:

Fig.1 ein Beispiel, das nützlich ist für das Verständnis der erfindungsgemäßen Sonde, mit einem seitlich herausschiebbaren Träger für die Sensoreinrichtungen,
Fig.2 ein Ausführungsbeispiel einer erfindungsgemäßen Sonde mit einem rotierenden Träger für die als Ferndetektoren ausgebildeten Sensoreinrichtungen und
Fig.3 eine schematische Darstellung eines optischen Ferndetektors.

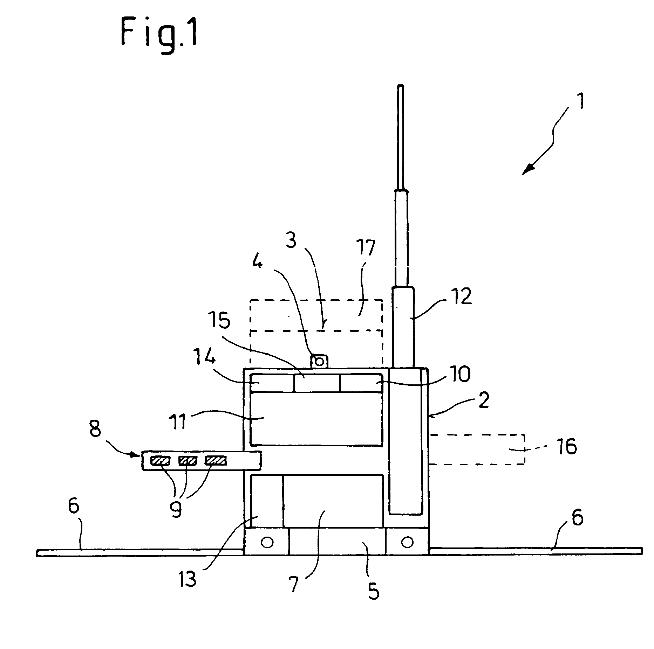

In Fig.1 ist mit 1 eine in einem Zielgebiet abgesetzte beispielhafte Sonde bezeichnet. Die Sonde 1 umfaßt ein Gehäuse 2, an dem sich eine gestrichelt angedeutete Fallschirmeinrichtung 3 befand, die kurz vor der Landung der Sonde 1 von dem Gehäuse 2 mittels eines Trennschlosses 4 abgetrennt wurde.

An dem Gehäuse 2 ist außerdem eine mechanische Aufrichtvorrichtung 5 vorgesehen, welche mehrere paddelförmige Aufrichtelemente 6 umfaßt, die nach der Landung bzw. einer manuellen Positionierung der Sonde 1 aufgeklappt wurden und die Sonde 1 in eine vorbestimmte Ausgangsposition bringen.

Ferner befinden sich an bzw. in dem Gehäuse 2 der Sonde 1 eine Stromversorgungseinrichtung 7, ein oder mehrere Träger 8 für Sensoreinrichtungen 9 zur Messung der Radioaktivität sowie zur Messung biologischer und/oder chemischer Kampfstoffe. Außerdem umfasst die Sonde 1 eine Vorrichtung 10 zur genauen Positionsbestimmung der Sonde 1, z.B. ein GPS Modul, und eine Auswerte- und Steuereinrichtung 11 mit einer Nachrichtenübermittlungseinrichtung 13 einschließlich einer teleskopartig ausschiebbaren Antenne 12 für die Datenfernübertragung der gemessenen Informationen.

Zur Bestimmung der Sondenausrichtung in Bezug zur magnetischen Nordrichtung und der Sondenneigung sind ein elektronischer Kompass 14 sowie ein Neigesensor 15 (z.B. ein Beschleunigungsaufnehmer) in die Sonde integriert. Dies dient u. a. auch der Bestimmung der Einstrahlrichtung radioaktiver Strahlungen.

Wird die Sonde 1 in das Zielgebiet verbracht und abgeworfen, wird diese durch die sich öffnende Fallschirmeinrichtung 3 abgebremst. Nach Abtrennen der Fallschirmeinrichtung 3 und Landung in dem vorgegebenen Einsatzgebiet wird die Sonde 1 mittels der Aufrichtvorrichtung 5 aufgerichtet und die Antenne 12 sowie der Träger 8 der Sensoreinrichtungen 9 aus dem Gehäuse 2 der Sonde 1 herausgeschoben oder herausgeschwenkt.

Bei Verbringen der Sonde 1 durch ein drallstabilisiertes Artilleriegeschoß muss die Sonde 1 vor dem Öffnen der Fallschirmeinrichtung 3 durch Drallflügel 16 entdrallt und während dieser Phase durch eine Stabilisierungseinheit 17 stabilisiert werden.

Anschließend wird dann mit Hilfe der Sensoreinrichtungen 9 und der Auswerte- und Steuereinrichtung 11 das Vorhandensein von Radioaktivität und biologischen sowie chemischen Kampfstoffen im Zielgebiet ermittelt und die entsprechenden Messwerte einschließlich der durch die Vorrichtung 10 ermittelten Position der Sonde 1 per Langstreckenfunk oder via Satellit an eine Operationszentrale übermittelt.

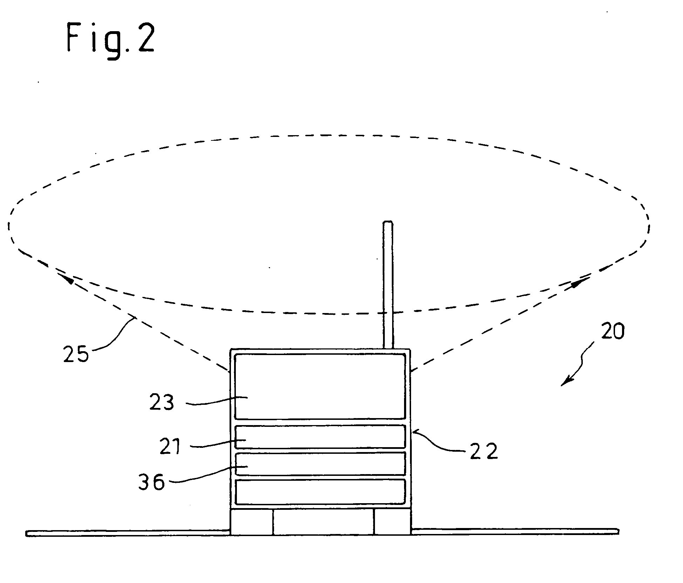

Während das in Fig.1 dargestellte Beispiel mit Sensoreinrichtungen arbeitet, welche ein Auftreten biologischer und/oder chemischer Kampfstoffe im Zielgebiet selbst voraussetzen, gibt das in Fig.2 dargestellte Ausführungsbeispiel eine erfindungsgemäße Sonde 20 wieder, mittels welcher Kampfstoffe auch außerhalb des Gebietes gemessen werden können, in dem die Sonde 20 abgesetzt wurde. Hierzu werden neben Sensoreinrichtungen 21 zur Bestimmung der Radioaktivität in das Gehäuse 22 der Sonde 20 integrierte Ferndetektoren 23 verwendet, welche den Gehalt der Luft an biologischen und/oder chemischen Kampfstoffen im Umkreis von z.B. bis zu 1 km messen.

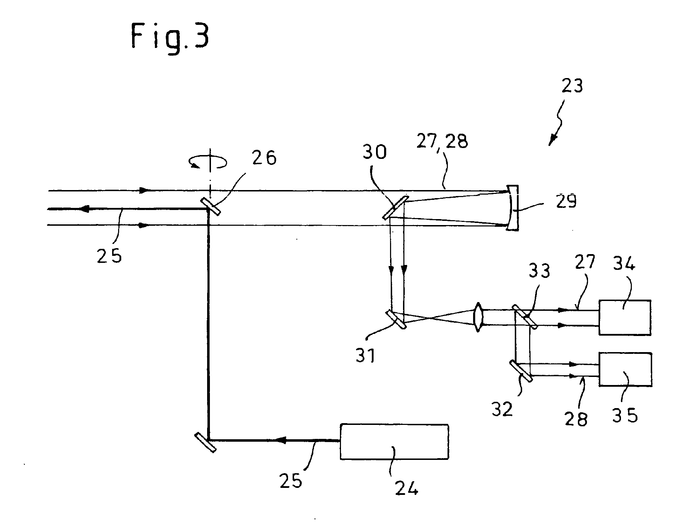

Ein entsprechender Ferndetektor 23 ist in Fig.3 schematisch dargestellt. Er umfaßt einen UV-Impuls-Laser 24 (z.B. einen Halbleiterlaser), welcher einen Laserstrahl 25 mit einer Wellenlänge von z.B. 270 nm erzeugt, der über einen rotierenden Umlenkspiegel 26 schräg nach oben gerichtet abgestrahlt wird (vgl. auch Fig.2).

Das von den nicht dargestellten Kampfstoffpartikeln elastisch gestreute Licht 27 bzw. das von den Kampfstoffen bei Bestrahlung erzeugte Fluoreszenzlicht 28 wird von einem Hohlspiegel 29 über Umlenkspiegel 30-32 und einen Strahlenteiler 33 auf entsprechende Sensoren 34, 35 gelenkt. Dabei handelt es sich bei dem mit 34 bezeichneten Sensor um einen Sensor, der für das elastische Streulicht empfindlich ist. Hingegen ist der mit 35 bezeichnete Sensor für das Fluoreszenzlicht (z.B. mit einer Wellenlänge von 380 nm) empfindlich.

Die Sensoren 34, 35 sind mit einer Auswerte- und Steuereinrichtung 36 (Fig.2) verbunden, welche aus den entsprechenden Meßwerten dann ermittelt, ob Kampfstoffe in dem untersuchten Raumwinkelbereich vorhanden sind und gegebenenfalls auch die Klassifizierung dieser Kampfstoffe bestimmt.

Die Erfindung ist selbstverständlich nicht auf das vorstehend beschriebene Ausfiihrungsbeispiel beschränkt. So kann die erfindungsgemäße Sonde z.B. auch mittels eines fernsteuerbaren autonomen Fahrzeuges manuell in dem jeweiligen Zielgebiet abgesetzt werden. In diesem Fall kann die Fallschirmeinrichtung entfallen.

### Bezugszeichenliste

- 1: Sonde
- 2: Gehäuse
- 3: Fallschirmeinrichtung, Bremsvorrichtung
- 4: Trennschloß
- 5: Aufrichtvorrichtung
- 6: Aufrichtelement
- 7: Stromversorgungseinrichtung
- 8: Träger
- 9: Sensoreinrichtung
- 10: Vorrichtung zur dreidimensionalen Positionsbestimmung, GPS-Modul
- 11: Auswerte- und Steuereinrichtung
- 12: Antenne
- 13: Nachrichtenübermittlungseinrichtung
- 14: Elektronischer Kompaß
- 15: Neigesensor
- 16: Drallflügel
- 17: Stabilisierungseinheit
- 20: Sonde
- 21: Sensoreinrichtung
- 22: Gehäuse
- 23: Ferndetektor; Sensoreinrichtung
- 24: Elektromagnetische Strahlungsquelle; Laser; UV-Impuls-Laser
- 25: Laserstrahl
- 26: Umlenkspiegel
- 27: elastisch gestreute Licht
- 28: Fluoreszenzlicht
- 29: Hohlspiegel
- 30-32: Umlenkspiegel
- 33: Strahlenteiler
- 34,35: Sensoren
- 36: Auswerte- und Steuereinrichtung

## Patentansprüche

1. Autonome, mittels Hubschrauber, Drohnen, Raketen und Cargogeschossen als auch manuell in ein Zielgebiet verbringbare, im Zielgebiet abgesetzte Sonde (20) mit den Merkmalen:
- die Sonde (20) umfasst Sensoreinrichtungen (21; 23) zur Messung der radioaktiven Strahlung im Zielgebiet sowie deren Einstrahlrichtung sowie zur Bestimmung des Gehaltes der Luft an biologischen Kampfstoffen und des Gehaltes der Luft an chemischen Kampfstoffen sowie deren Klassifizierung, wobei es sich bei den Sensoreinrichtungen (23) zur Bestimmung des Gehaltes der Luft an biologischen und chemischen Kampfstoffen um Ferndetektoren handelt,
- die Sonde (20) umfasst ferner ein Gehäuse (22) mit einer elektronischen Auswerte- und Steuereinrichtung (36), mit Hilfe welcher die von den Sensoreinrichtungen (21; 23) ermittelten Messwerte ausgewertet werden können, sowie eine Nachrichtenübermittlungseinrichtung (13), mit Hilfe derer die Messwerte oder die ausgewerteten Messwerte an eine Operationszentrale übermittelbar sind, und
- die Ferndetektoren (23) mindestens eine elektromagnetische Strahlungsquelle (24) und eine Empfangsvorrichtung zum Empfang gestreuter oder durch den Primärstrahl angeregter elektromagnetischer Strahlung umfassen.

2. Sonde nach Anspruch 1, **dadurch gekennzeichnet, dass** es sich bei der elektromagnetischen Strahlungsquelle (24) um eine einen Laser umfassende Laseranordnung und bei der Empfangsvorrichtung um eine optische Messeinrichtung handelt.

3. Sonde nach Anspruch 2, **dadurch gekennzeichnet, dass** es sich bei dem Laser (24) um einen UV-Laser handelt, dessen Wellenlänge derart gewählt ist, dass die biologischen und/oder chemischen Kampfstoffe durch die Bestrahlung zur Fluoreszenz angeregt werden, die mit der Empfangsvorrichtung gemessen wird.

4. Sonde nach einem der Ansprüche 1 bis 3, **dadurch gekennzeichnet, dass** die Sonde (20) eine Vorrichtung zur Erzeugung eines schräg nach oben gerichteten rotierenden Laserstrahles (25) umfasst.

5. Sonde nach einem der Ansprüche 1 bis 4, **dadurch gekennzeichnet, dass** im Falle einer durch Abwurf verbringbaren Sonde (20) an oder in dem Gehäuse (22) eine Bremsvorrichtung (3) und eine Aufrichtvorrichtung (5) -welche auch bei manueller Verbringung vorhanden ist- vorgesehen sind.

6. Sonde nach einem der Ansprüche 1 bis 5, **dadurch gekennzeichnet, dass** bei der Verbringung der Sonde (20) durch ein drallstabilisiertes Artilleriegeschoß ein Entdrallvorgang durch Drallflügel (16) und eine Stabilisierungseinheit (17) vorgesehen ist.

7. Sonde nach einem der Ansprüche 1 bis 6, **dadurch gekennzeichnet, dass** die Sonde (20) eine Vorrichtung zur dreidimensionalen Positionsbestimmung (10), z.B. ein GPS-Modul umfasst.

8. Sonde nach einem der Ansprüche 1 bis 7, **dadurch gekennzeichnet, dass** ein elektronischer Kompass (14) zur Bestimmung der Ausrichtung in Bezug auf die magnetische Nordrichtung des Erdmagnetfeldes und ein Neigesensor (15) zur Bestimmung der Winkellage im Raum integriert sind.

## Claims

1. Autonomous sonde (20) which can be deployed by means of helicopters, drones, rockets, and cargo projectiles and manually into a target region, and is placed in the target region, having the following features:
- the sonde (20) has sensor devices (21; 23) for measuring the radioactive radiation in the target region, as well as its incidence direction, and in order to determine the biological weapon agents contained in the air and the chemical weapon agents contained in the air, and to classify them, wherein the sensor devices (23) can determine the biological and chemical weapon agents contained in the air are remote detectors,
- the sonde (20) furthermore has a housing (22) with an electronic evaluation and control device (36), with the aid of which the measured values determined by the sensor devices (21; 23) can be evaluated, as well as a message transmission device (13) with the aid of which the measured values or the evaluated measured values can be transmitted to an operation centre, and
- the remote detectors (23) have at least one electromagnetic radiation source (24) and a receiving apparatus for receiving scattered electromagnetic radiation or electromagnetic radiation excited by the primary beam.

2. Sonde according to Claim 1, **characterized in that** the electromagnetic radiation source (24) is a laser arrangement, which has a laser, and the receiving apparatus is an optical measurement device.

3. Sonde according to Claim 2, **characterized in that** the laser (24) is a UV laser, whose wavelength is chosen such that the biological and/or chemical weapon agents are excited to fluorescence by the irradiation, and this fluorescence is measured by the receiving apparatus.

4. Sonde according to one of Claims 1 to 3, **characterized in that** the sonde (20) has an apparatus for producing a rotating laser beam (25) which is directed obliquely upwards.

5. Sonde according to one of Claims 1 to 4, **characterized in that**, if the sonde (20) can be deployed by ejection, a braking apparatus (3) and an alignment apparatus (5), which is also provided for manual deployment, are provided on or in the housing (22).

6. Sonde according to one of Claims 1 to 5, **characterized in that**, in order to deploy the sonde (20) by means of a spin-stabilized artillery projectile, a despinning process is provided by means of spin vanes (16) and a stabilization unit (17).

7. Sonde according to one of Claims 1 6, **characterized in that** the sonde (20) has an apparatus for three-dimensional position finding (10), for example a GPS module.

8. Sonde according to one of Claims 1 to 7, **characterized in that** an electronic compass (14) for determining the alignment with respect to the magnetic north direction of the earth's magnetic field and an inclination sensor (15) for determining the angular position in space are integrated.

## Revendications

1. Sonde (20) autonome déposée dans une zone destinataire, pouvant être amenée dans la zone destinataire par hélicoptère, drone, fusée et munition cargo ainsi que manuellement, ayant les caractéristiques suivantes :
- la sonde (20) comprend des dispositifs de détection (21, 23) pour mesurer le rayonnement radioactif dans la zone destinataire ainsi que le sens de leur irradiation et pour déterminer la teneur de l'air en agents de combat biologiques et la teneur de l'air en agents de combat chimiques ainsi que leur classification, les dispositifs de détection (23) destinés à déterminer la teneur de l'air en agents de combat biologiques et chimiques étant des détecteurs à distance,
- la sonde (20) comprend en plus un boîtier (22) muni d'un dispositif électronique d'interprétation et de commande (36) à l'aide duquel les valeurs mesurées déterminées par les dispositifs de détection (21, 23) peuvent être interprétées, ainsi qu'un dispositif de communication d'informations (13) à l'aide duquel les valeurs mesurées ou les valeurs mesurées interprétées peuvent être communiquées à un centre des opérations et
- les détecteurs à distance (23) comprennent au moins une source de rayonnement électromagnétique (24) et un dispositif de réception pour recevoir le rayonnement électromagnétique dispersé ou excité par le rayon primaire.

2. Sonde selon la revendication 1, **caractérisée en ce que** la source de rayonnement électromagnétique (24) est un arrangement laser comprenant un laser et le dispositif de réception est un dispositif de mesure optique.

3. Sonde selon la revendication 2, **caractérisée en ce que** le laser (24) est un laser UV dont la longueur d'onde est choisie de telle sorte que l'irradiation excite les agents de combat biologiques et/ou chimiques jusqu'à une fluorescence qui est mesurée avec le dispositif de réception.

4. Sonde selon l'une des revendications 1 à 3, **caractérisée en ce que** la sonde (20) comprend un dispositif pour générer un rayon laser (25) rotatif dirigé en biais vers le haut.

5. Sonde selon l'une des revendications 1 à 4, **caractérisée en ce que** dans le cas d'une sonde (20) qui peut être amenée par lâchage, il est prévu sur ou dans le boîtier (22) un dispositif de freinage (3) et un dispositif de redressement (5), lequel est également présent dans le cas d'une amenée manuelle.

6. Sonde selon l'une des revendications 1 à 5, **caractérisée en ce que** lorsque la sonde (20) est amenée par une munition d'artillerie à couple de torsion stabilisé, il est prévu une opération de dégyration par des ailettes giratoires (16) et une unité de stabilisation (17).

7. Sonde selon l'une des revendications 1 à 6, **caractérisée en ce que** la sonde (20) comprend un dispositif de détermination tridimensionnelle de la position (10), par exemple un module GPS.

8. Sonde selon l'une des revendications 1 à 7, **caractérisée en ce que** sont intégrés une boussole électronique (14) destinée à déterminer l'orientation par rapport à la direction du Nord magnétique du champ magnétique terrestre ainsi qu'un capteur d'inclinaison (15) destiné à déterminer la position angulaire dans l'espace.
